# EUROPÄISCHE PATENTSCHRIFT

(11) **EP 0 713 033 B1**
(45) Veröffentlichungstag und Bekanntmachung des Hinweises auf die Patenterteilung: **11.02.1998**
(21) Anmeldenummer: 95117678.3
(22) Anmeldetag: 09.11.1995
(51) Int. Cl.: F16H 37/04

(54) **Wechselgetriebe mit Vorgelegewelle und Planetenrad-Untersetzunggetriebe, insbesondere für Kraftfahrzeuge**
Change speed transmission with countershaft and planetary reduction gearing for automotive vehicles
Boîte de vitesses à arbre intermédiaire et avec réducteur planétaire pour véhicule

(30) Priorität: 15.11.1994 DE 4440710
(43) Veröffentlichungstag der Anmeldung: 22.05.1996
(73) Patentinhaber: Ford-Werke Aktiengesellschaft, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Petri, Hans, D-53804 Much (DE); Thomas, Steven G., Bloomfield Hills, Michigan 48301 (US)
(74) Vertreter: Messulam, Alec Moses

(56) Entgegenhaltungen:
- EP-A- 0 657 667
- DE-A- 4 109 832
- DE-A- 4 205 668
- DE-C- 3 342 260
- US-A- 2 592 210
- US-A- 5 390 559

## Beschreibung

Die Erfindung bezieht sich auf ein Wechselgetriebe mit Vorgelegewelle und Planetenrad-Untersetzungsgetriebe, insbesondere für Kraftfahrzeuge, der im Oberbegriff des Patentanspruches 1 erläuterten Art.

Aus der DE-A- 34 15 479 ist ein Wechselgetriebe der im Oberbegriff des Anspruches 1 erläuterten Art bekannt.

Bei dem bekannten Wechselgetriebe sind auf einer Eingangswelle, einer Vorgelegewelle und einer Ausgangswelle feste und lose Zahnräder angeordnet, die paarweise miteinander in Eingriff stehen und die über auf den Wellen angeordneten Synchronisierkupplungen zum Schalten der einzelnen Gänge mit ihren Wellen treibend verbindbar sind und wobei das Planetenrad-Untersetzungsgetriebe aus einem im Getriebegehäuse festgelegten Ringrad, einem über die Zahnradpaare antreibbaren, auf einer zur Ausgangswelle konzentrischen Hohlwelle angeordneten Sonnenrad und einem mit der Ausgangswelle verbundenen Planetenradträger besteht.

Bei dem bekannten Wechselgetriebe ist zusätzlich zu der das Sonnenrad tragenden Hohlwelle noch eine weitere Hohlwelle vorgesehen, auf der weitere Zahnräder fest und eines lose benachbart einer Synchronisierkupplung angeordnet sind und diese zusätzliche Hohlwelle ist mit der Hohlwelle des Sonnenrades verbindbar. Darüber hinaus ist diese weitere Hohlwelle über ein auf ihr angeordnetes festes Zahnrad über eine auf der Ausgangswelle angeordnete Synchronisierkupplung mit der Ausgangswelle verbindbar.

Bei dem bekannten Wechselgetriebe wird darauf hingewiesen, daß die Übersetzung der einzelnen Zahnradpaare durch das nachgeschaltete Planetenrad-Untersetzungsgetriebe geringer ausgeführt werden können, wodurch das Getriebe insgesamt kompakter ausgeführt werden kann.

Die Aufgabe der Erfindung ist es, ein Wechselgetriebe mit Vorgelegewelle und Planetenrad-Untersetzungsgetriebe, insbesondere für Kraftfahrzeuge, derart zu verbessern, daß es als ein sogenanntes Transaxlegetriebe für eine quer im Fahrzeug eingebaute Frontantriebseinheit verwendet werden kann, wobei insbesondere die zum Schalten der niedrigeren Gänge zu bewältigende Synchronisierarbeit wesentlich verringert werden soll, damit einerseits ein leichteres Schalten erzielt und andererseits ein unnötig hoher Bauaufwand für die Synchronisierkupplungen vermieden werden kann.

Gemäß der Erfindung wird diese Aufgabe gelöst, indem bei einem Wechselgetriebe gemäß der im Oberbegriff des Patentanspruches 1 die im Kennzeichenteil des Patentanspruches 1 aufgezeigten Merkmale angewendet werden.

Im Anspruch 2 ist eine weitere zweckmäßige Ausgestaltung der Erfindung erläutert.

Die Erfindung wird anhand eines in den Zeichnungen gezeigten Ausführungsbeispieles näher erläutert. Es zeigt:
- Fig. 1: ein Getriebeschema für ein erfindungsgemäßes Wechselgetriebe mit sechs Vorwärtsgängen und eimem Rückwärtsgang;
- Fig. 2: ein Kraftflußdiagramm für die gering untersetzten Gänge 3, 4, 5 und 6;
- Fig. 3: ein Kraftflußdiagramm für die hoch untersetzten Gänge 1, 2 und den Rückwärtsgang;
- Fig. 4: in einem Diagramm die Spreizung der Übersetzungen der verschiedenen Gänge;
- Fig. 5: in einem Diagramm die gegenüber einem herkömmlichen Transaxlegetriebe wesentlich verringerte erforderliche Synchronisierarbeit und
- Fig. 6: eine schematische Getriebeaufrollung einer konstruktiven Ausführung des erfindungsgemäßen Getriebes für ein Kraftfahrzeug mit sechs Vorwärtsgängen und einem Rückwärtsgang.

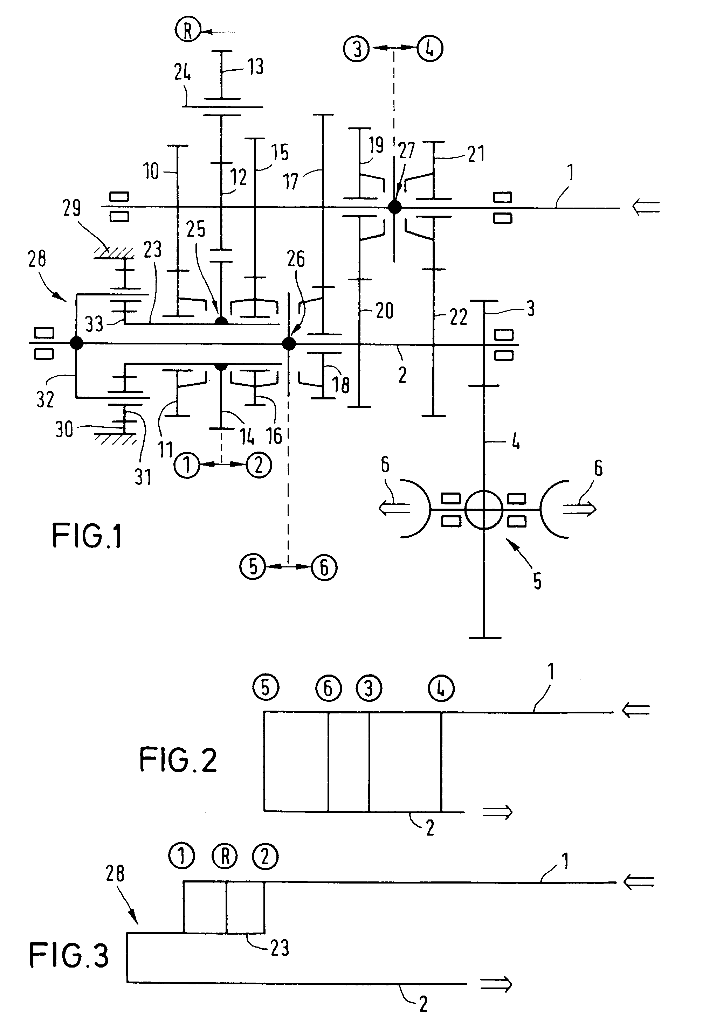

Das in den Fig. 1 bis 5 beschriebene Wechselgetriebe mit Vorgelegewelle und Planetenrad-Untersetzungsgetriebe, insbesondere für Kraftfahrzeuge, ist als ein sogenanntes Transaxlegetriebe ausgelegt, bei dem zu einer Eingangswelle 1 parallel laufend eine Vorgelegewelle 2 angeordnet ist, die gleichzeitig die Ausgangswelle bildet und die über eine Endübersetzung aus zwei Stirnzahnrädern 3 und 4 unmittelbar eine Differentialeinheit 5 antreibt, von der Achsantriebswellen 6 für die Frontantriebsräder des Kraftfahrzeuges angetrieben werden.

Sowohl auf der Eingangswelle 1 als auch auf der Vorgelegebzw. Ausgangswelle 2 sind eine Vielzahl von Zahnrädern fest bzw. lose laufend angeordnet, die paarweise miteinander in ständigem Eingriff stehen und so verschiedene Übersetzungen für die verschiedenen Gänge zur Verfügung stellen.

Die Zahnradpaare für den ersten Gang, den zweiten Gang und den Rückwärtsgang sind mit ihren festen Rädern 10, 12 und 15 auf der Eingangswelle angeordnet, während die losen Räder 11 und 16 für den ersten und zweiten Gang auf einer die Ausgangswelle 2 umfassenden Hohlwelle 23 angeordnet sind, auf der auch das Zahnrad 14 für den Rückwärtsgang angeordnet ist, das über ein auf einer Achse 24 angeordnetes Umkehrrad 13 in Eingriff mit dem Zahnrad 12 auf der Eingangswelle steht.

Ein festes Zahnrad 17 für den sechsten Gang ist auf der Eingangswelle 1 angeordnet und das lose Zahnrad 18 für den sechsten Gang ist auf der Ausgangswelle 2 angeordnet. Auf der Ausgangswelle 2 sind weiterhin feste Zahnräder 20 und 22 für den dritten und vierten Gang angeordnet, die in Eingriff mit auf der Eingangswelle 1 lose angeordneten Zahnrädern 19 und 21 stehen.

Zwischen den losen Zahnrädern 11 und 16 ist eine Synchronisierkupplung 25, zwischen den losen Zahnrädern 16 und 18 eine Synchronisierkupplung 26 und zwischen den losen Zahnrädern 19 und 21 eine Synchronisierkupplung 27 angeordnet.

Konzentrisch zur Vorgelegewelle bzw. Ausgangswelle 2 ist ein Planetenrad-Untersetzungsgetriebe 28 angeordnet. Das Planetenrad-Untersetzungsgetriebe 28 besteht aus einem am Getriebegehäuse 29 festgelegten Ringrad 30, das mit Planetenräder 31 in Eingriff steht, die auf einem Planetenradträger 32 drehbar angeordnet sind, der drehfest mit der Ausgangswelle 2 verbunden ist. Die Planetenräder 31 stehen weiterhin mit einem Sonnenrad 33 in Eingriff, das auf der die Ausgangswelle 2 konzentrisch umfassenden Hohlwelle 23 angeordnet und mit dieser fest verbunden ist.

In Fig. 1 ist die Schaltrichtung der entsprechenden Schiebemuffe einer Synchronisierkupplung mit Pfeilen angedeutet, die die dann in einem Kreis die jeweils eingerückte Gangstufe angeben.

Zum Schalten des ersten Ganges wird die Synchronkupplung 25 nach links bewegt, wodurch eine treibende Verbindung vom Zahnrad 10 über das Zahnrad 11 zur Hohlwelle 23 geschaffen wird. Die Hohlwelle 23 treibt das Sonnenrad 33 an und infolge des festgelegten Ringrades 30 dreht sich der Planetenradträger 32 und mit ihm die fest verbundene Ausgangswelle 2 mit einer Übersetzung, die aus der Muliplikation der Übersetzung der Zahnräder 10 und 11 und der Übersetzung des Planetenradsatzes 28 gebildet wird.

Zum Schalten des zweiten Ganges wird die Synchronisierkupplung 25 zur anderen Seite hin verschoben, wodurch eine Verbindung zwischen dem Zahnrad 15 und dem mit diesem in Eingriff stehenden Zahnrad 16 zur Hohlwelle 23 hergestellt wird. Auch hier ist wieder die Gesamtuntersetzung eine Multiplikation der Teilübersetzung der Zahnräder 15 und 16 mit der Untersetzung des Planetenradsatzes 28.

Zum Schalten des dritten und vierten Ganges wird die Synchronkupplung 27 einmal zur einen und das andere Mal zur anderen Seite hin geschaltet, wodurch eine treibende Verbindung einerseits zwischen den Zahnrädern 19 und 20 und andererseits zwischen den Zahnrädern 21 und 22 und der Ausgangswelle 2 hergestellt wird.

Zum Schalten des fünften und sechsten Ganges wird die auf der Ausgangswelle 2 benachbart der Hohlwelle 23 angeordnete Synchronisierkupplung 26 in Fig. 1 gesehen, nach links geschaltet, wodurch eine treibende Verbindung zwischen den in Eingriff stehenden Zahnrädern 15 und 16 und der Ausgangswelle 2 hergestellt wird. Wird die Synchronkupplung 26 in Fig. 1 gesehen, nach rechts geschaltet, so wird eine treibende Verbindung zwischen den in Eingriff stehenden Zahnrädern 17 und 18 und der Ausgangswelle 2 hergestellt. Die Übersetzungen des fünften und sechsten Ganges sind hierbei in dem vorliegenden Ausführungsbeispiel so angelegt, daß beide bereits eine Art Schongang, d.h., eine Übersetzung ins Schnelle darstellen.

Wie aus den Fig. 2 und 3 ersichtlich wird, werden die verhältnismäßig niedrig übersetzten Gänge 3, 4, 5 und 6 ohne Miteinschaltung des Planetenradsatzes geschaltet, wohingegen die hoch untersetzten Gänge, erster Gang, zweiter Gang und Rückwärtsgang unter Einschaltung der Hohlwelle 23 und des Planetenradsatzes 28 geschaltet werden.

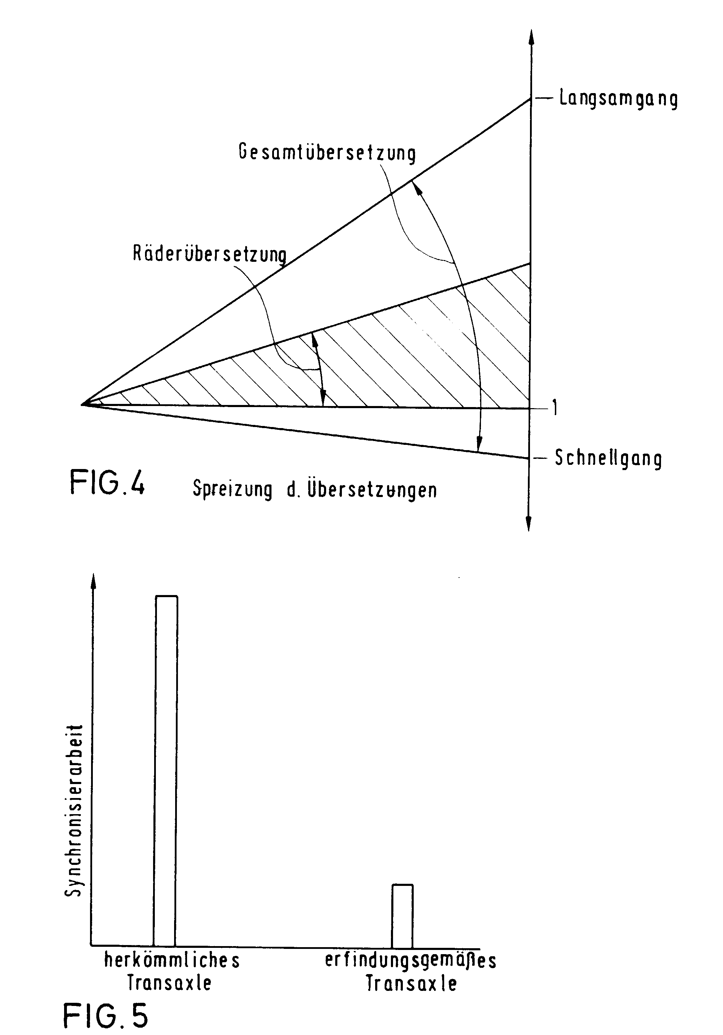

Wie aus Fig. 4 ersichtlich wird, die die Spreizung der Übersetzungen zeigt, setzt sich die Gesamtspreizung der Übersetzungen zwischen einem Langsamgang und einem Schnellgang aus der Multiplikation der Einzelübersetzungen der Zahnradpaare und dem Planetenrad-Untersetzungsgetriebe dar.

Wie aus Fig. 5 ersichtlich wird, ist die Synchronisierarbeit zum Schalten eines Transaxles in herkömmlicher Bauform verglichen mit einem Transaxles gemäß der Erfindung, um etwa 3/4 geringer anzusetzen, da die während des Synchronisiervorganges abzubremsenden Massen der Zahnräder durch die geringeren Durchmesser um etwa eine Potenz geringer angesetzt werden müssen.

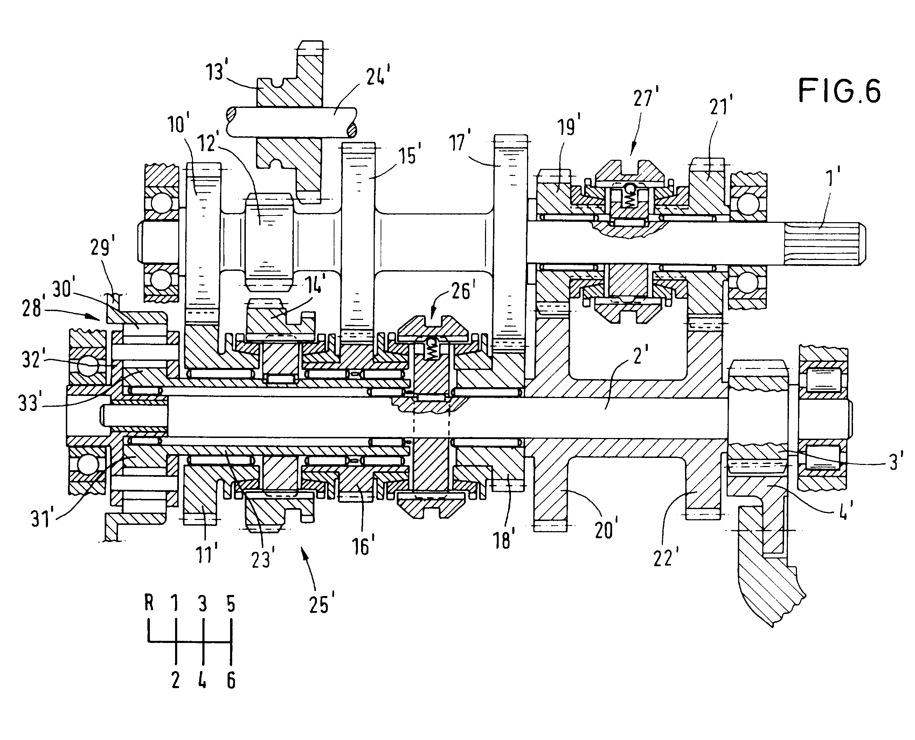

Bei der in Fig. 6 gezeigten konstruktiven Ausführungsform des Getriebes nach Fig. 1 sind die gleichen Bezugszeichen wie in Fig. 1 verwendet, wobei diese lediglich zur Klarstellung mit einem Strich-Index versehen wurden.

Nachdem der Aufbau und die Funktionsweise bereits im Zusammenhang mit Fig. 1 erläutert wurde, braucht die Fig. 6 nicht mehr im einzelnen erläutert zu werden, sie dient lediglich als Hinweis darauf, in welcher Form die losen Zahnräder gegenüber ihren Wellen angeordnet sind und in welcher Form die das Sonnenrad 33' aufnehmende Hohlwelle 23' angeordnet sein kann.

Selbstverständlich ist das in dem Ausführungsbeispiel aufgezeigte Getriebekonzept in vielfältiger Weise modifizierbar und soll keine Einschränkung im Hinblick auf die Anwendung des Planetenradsatzes in Verbindung mit den höher untersetzten Gängen bewirken.

## Patentansprüche

1. Wechselgetriebe mit Vorgelegewelle und Planetenrad-Untersetzungsgetriebe, insbesondere für Kraftfahrzeuge, mit auf einer Eingangswelle (1) und einer Vorgelege-Ausgangswelle (2) angeordneten festen und losen Zahnrädern, die miteinander in Eingriff stehende Zahnradpaare bilden, die über auf den Wellen (1, 2 und 23) angeordneten Synchronkupplungen (25, 26 und 27) zum Schalten der einzelnen Gänge mit ihren Wellen treibend verbindbar sind und wobei das Planetenrad- Untersetzungsgetriebe (28) aus einem im Getriebegehäuse (29) festgelegten Ringrad (30), einem über einen Zahnradsatz (15/16 bzw. 10/11) angetriebenen, auf einer die Ausgangswelle (2) konzentrisch umfassenden Hohlwelle (23) angeordneten Sonnenrad (33) und einem mit der Ausgangswelle (2) verbundenen Planetenradträger (32) besteht, wobei benachbart einer auf der Hohlwelle (23) des Sonnenrades (33) angeordneten Synchronkupplung (25) ein loses Zahnrad (16) mit an beiden Seiten angeordneten Synchronkupplungseinrichtungen angeordnet ist und benachbart der Hohlwelle (23) des Sonnenrades (33) auf der Vorgelege-Ausgangswelle (2) eine Synchronisierkupplung (26) angeordnet ist, wobei das benachbarte lose Zahnrad (16) auf der Hohlwelle (23) zum Schalten eines zweiten Ganges mit der Hohlwelle (23) über die Synchronkupplung (25) und zum Schalten eines fünften Ganges mit der Vorgelege-Ausgangswelle (2) über die Synchronisierkupplung (26) verbindbar ist und benachbart der Synchronkupplung (26) auf der Vorgelege-Ausgangswelle (2) ein loses Zahnrad (18) angeordnet ist, das in Eingriff mit einem Zahnrad (17) auf der Eingangswelle (1) steht, um einen ins Schnelle übersetzten sechsten Gang zu schalten.

## Claims

1. A change speed gearbox with a layshaft and a planetary reduction gear unit, particularly for motor vehicles, having, carried on an input shaft (1) and on a layshaft/output shaft (2), fixed and loose gearwheels that are in constant mesh with one another to form gearwheel pairs and are drivably connectable to their shafts by means of synchronizers (25, 26 and 27) carried on the shafts (1, 2 and 23) to select the individual gears, the planetary reduction gear unit (28) comprising a ring gear (30) fixed in the gearbox casing (29), a sun wheel (33) driven by way of a set of gearwheels (15/16 or 10/11) and carried on a sleeve shaft (23) concentrically embracing the output shaft (2), and a planet pinion carrier (32) connected to the output shaft (2), wherein adjacent a synchronizer (25) carried on the sleeve shaft (23) of the sun wheel (33) a loose gearwheel (16) is provided which has synchronizer devices arranged on either side of it, and a synchronizer (26) is carried on the layshaft/output shaft (2), adjacent the sleeve shaft (23) of the sun wheel (33), in such a way that the adjacent loose gearwheel (16) on the sleeve shaft (23) is connectable to the sleeve shaft (23) through the synchronizer (25) to select a second gear and is connectable to the layshaft/output shaft (2) through the synchronizer (26) to select a fifth gear, and adjacent the synchronizer (26) there is carried on the layshaft/output shaft (2) a loose gearwheel (18) which is in constant mesh with a gearwheel (17) on the input shaft (1), in order to provide an overdrive sixth gear.

## Revendications

1. Boîte de vitesses munie d'un arbre intermédiaire et d'un engrenage démultiplicateur à train épicycloïdal, en particulier pour véhicules automobiles, présentant des pignons fixes et fous disposés sur un arbre d'entrée (1) et sur un arbre intermédiaire de sortie (2), et formant des paires de pignons qui sont mutuellement en prise et peuvent être mises en liaison d'entraînement avec leurs arbres, par l'intermédiaire d'accouplements de synchronisation (25, 26 et 27) implantés sur les arbres (1, 2 et 23), en vue de l'enclenchement des rapports individuels ; boîte dans laquelle l'engrenage démultiplicateur (28) à train épicycloïdal se compose d'une couronne dentée (30) assujettie dans le carter (29) de l'engrenage, d'une roue planétaire (33) entraînée par l'intermédiaire d'un jeu de pignons (15/16, respectivement 10/11) et calée sur un arbre creux (23) entourant concentriquement l'arbre de sortie (2), et d'un porte-satellites (32) relié à l'arbre de sortie (2) ; dans laquelle, au voisinage d'un accouplement de synchronisation (25) placé sur l'arbre creux (23) de la roue planétaire (33), se trouve un pignon fou (16) comportant des dispositifs d'accouplement synchrone placés des deux côtés, et un accouplement de synchronisation (26) est implanté, sur l'arbre intermédiaire de sortie (2), au voisinage de l'arbre creux (23) de la roue planétaire (33) ; et dans laquelle le pignon fou voisin (16) situé sur l'arbre creux (23) peut être relié à l'arbre creux (23) par l'intermédiaire de l'accouplement de synchronisation (25), en vue de l'enclenchement d'une deuxième vitesse, et peut être relié à l'arbre intermédiaire de sortie (2), au moyen de l'accouplement de synchronisation (26), en vue de l'enclenchement d'une cinquième vitesse, et l'arbre intermédiaire de sortie (2) comporte, au voisinage de l'accouplement de synchronisation (26), un pignon fou (18) en prise avec un pignon (17), sur l'arbre d'entrée (1), en vue d'enclencher une sixième vitesse surmultipliée.
